# EUROPÄISCHE PATENTANMELDUNG

(11) **EP 2 469 679 A2**
(43) Veröffentlichungstag der Anmeldung: **27.06.2012**
(21) Anmeldenummer: 11193494.9
(22) Anmeldetag: 14.12.2011
(51) Int. Cl.: H02J 3/32

(54) **Vorrichtung und Verfahren zur Versorgung eines elektrischen Gerätes mit elektrischer Energie**

(30) Priorität: 22.12.2010 DE 102010063951
(71) Anmelder: BSH Bosch und Siemens Hausgeräte GmbH, 81739 München (DE)
(72) Erfinder: Feisthammel, Egon, 76437 Rastatt (DE); Gerzen, Jakob, 76646 Bruchsal (DE); Moser, Steffen, 76703 Kraichtal (DE); Renkema, Steffen, 75015 Bretten (DE); Wendland, Markus, 78056 VS-Schwenningen (DE)

(57) **Zusammenfassung**

Gegenstand der Erfindung ist eine Vorrichtung zur Versorgung eines elektrischen Gerätes mit elektrischer Energie, welche einen Energiespeicher und eine Steuervorrichtung aufweist. Der Energiespeicher ist dazu eingerichtet, die elektrische Energie zu speichern und die gespeicherte elektrische Energie dem elektrischen Gerät bereitzustellen. Die Steuervorrichtung ist dazu eingerichtet, das Laden des Energiespeichers mit der von einem Energieversorgungsnetz bereitgestellten elektrischen Energie in Abhängigkeit von zumindest einem über das Energieversorgungsnetz übertragenen Steuersignal zu steuern.

## Beschreibung

Die Erfindung betrifft eine Vorrichtung und ein Verfahren zur Versorgung eines elektrischen Gerätes mit elektrischer Energie. Ferner betrifft die Erfindung ein solches elektrisches Gerät.

Bei einer herkömmlichen Versorgung eines elektrischen Gerätes mit elektrischer Energie erfolgt die Aufnahme der elektrischen Energie aus dem Energieversorgungsnetz zeitgleich mit dem Betrieb des Gerätes.

Des Weiteren sind im Bereich des Managements von solchen Energieversorgungsnetzen zukünftig auch intelligente Steuersysteme basierend auf einer Smart-Grid-Technologie angedacht. Mittels der Smart-Grid-Technologie kann das intelligente Steuersystem des Energieversorgungsnetzes die gekoppelten elektrischen Geräte mittels Steuersignalen steuern. Dadurch können die intelligenten Steuersysteme, insbesondere zur Abfederung von Spitzenlastzeiten im Energieversorgungsnetz, Einfluss auf das Betriebsverhalten der angeschlossenen elektrischen Geräte nehmen. So kann beispielsweise der Start des Waschvorganges einer Waschmaschine über ein solches intelligentes Steuersystem in Niedriglastzeiten des Energieversorgungsnetzes gelegt werden.

Wird aber über ein solches intelligentes Steuersystem basierend auf der Smart-Grid-Technologie der Betriebszustand des elektrischen Gerätes, beispielsweise eines lüftungstechnischen Gerätes wie einer Dunstabzugshaube, beispielsweise durch Herunterschalten der Lüfterstufen zur Reduzierung des Leistungsaufnahme, beeinflusst, so ist das für den Benutzer umgehend wahrnehmbar. Dies ist beispielsweise im Falle der Dunstabzugshaube eine Beeinträchtigung des Benutzerkomforts und kann von dem Benutzer auch als störend empfunden werden.

Die Druckschrift US 2008/0114499A1 zeigt eine herkömmliche Vorrichtung zur Versorgung eines elektrischen Gerätes mit elektrischer Energie. Die Vorrichtung hat einen Batterie-Speicher, der in Abhängigkeit eines Zeitplans geladen wird.

Der vorliegenden Erfindung liegt die Aufgabe zugrunde, ein Konzept für eine verbesserte Versorgung eines elektrischen Gerätes mit elektrischer Energie zur Verfügung zu stellen. Diese Aufgabe wird erfindungsgemäß dadurch gelöst, dass eine Vorrichtung zur Versorgung eines elektrischen Gerätes mit elektrischer Energie bereitgestellt wird, welche mit einem Energiespeicher zum Bereitstellen der elektrischen Energie für das elektrische Gerät ausgestattet ist, wobei das Laden des Energiespeichers mit der von dem Energieversorgungsnetz bereitgestellten elektrischen Energie in Abhängigkeit eines Steuersignals gesteuert wird, welches von dem intelligenten Energieversorgungsnetz übertragen wird. Somit kann das intelligente Energieversorgungsnetz das Laden der Vorrichtung steuern, beispielsweise derart, dass der Energiespeicher der Vorrichtung in Niedriglastzeiten des Energieversorgungsnetzes geladen wird.

Demgemäß wird eine Vorrichtung zur Versorgung eines elektrischen Gerätes mit elektrischer Energie vorgeschlagen, welche einen Energiespeicher und eine Steuervorrichtung aufweist. Der Energiespeicher ist dazu eingerichtet, die elektrische Energie zu speichern und die gespeicherte elektrische Energie dem elektrischen Gerät bereitzustellen. Die Steuervorrichtung ist dazu eingerichtet, das Laden des Energiespeichers mit der von einem Energieversorgungsnetz bereitgestellten elektrischen Energie in Abhängigkeit von zumindest einem über das Energieversorgungsnetz übertragenen Steuersignal zu steuern.

Durch den mittels des Energieversorgungsnetzes steuerbaren Energiespeicher der Vorrichtung wird die Energieeffizienz des elektrischen Gerätes gesteigert. Des Weiteren kann die Vorrichtung mit Hilfe des zumindest einen Steuersignals des Energieversorgungsnetzes die Potenziale der Smart-Grid-Technologie nutzen. Insbesondere kann der Betrieb des elektrischen Gerätes zeitversetzt zur Energieaufnahme aus dem Energieversorgungsnetz erfolgen.

Der Energiespeicher, insbesondere die Speicherkapazität des Energiespeichers, ist vorzugsweise an den Energieverbrauch des elektrischen Gerätes angepasst. Das elektrische Gerät ist beispielsweise ein lüftungstechnisches Gerät, wie eine Dunstabzugshaube, eine Lüftungsvorrichtung oder eine Abluftvorrichtung. Das lüftungstechnische Gerät kann beispielsweise auch als Lüftungsmodul für den Sanitärbereich oder als ein Gebläse für zentrale Lüftungsanlagen für Niedrigenergiehäuser ausgebildet sein.

Das elektrische Gerät kann auch als ein Kühlschrank oder ein Tiefkühlgerät ausgebildet sein.

Das Energieversorgungsnetz ist insbesondere ein intelligentes Stromnetz, welches auf der Smart-Grid-Technologie basiert und Steuersignale zum Steuern an das Stromnetz angeschlossener Vorrichtungen bereitstellen kann.

Durch die gezielte Steuerung des Aufladevorgangs durch das zumindest eine über das Energieversorgungsnetz übertragene Steuersignal kann der Vorgang des Ladens des Energiespeichers in Zeiträume außerhalb von Spitzenlastzeiten des Energieversorgungsnetzes verlagert werden. Dadurch kann die Vorrichtung zur Glättung von Verbrauchsspitzen im Energieversorgungsnetz durch Ausschöpfung der Potenziale der Smart-Grid-Technologie beitragen. Des Weiteren kann eine für den Benutzer wahrnehmbare Beeinflussung des Betriebsverhaltens des elektrischen Gerätes beim Einsatz der Smart-Grid-Technologien, wie z.B. das Herunterschalten der gewählten Lüfterstufe zur Senkung der Leistungsaufnahme in Spitzenlastzeiten, vermieden werden.

Gemäß einer bevorzugten Weiterbildung ist eine Anschlussvorrichtung zum Anschluss der Vorrichtung an das Energieversorgungsnetz vorgesehen, welche dazu eingerichtet ist, die elektrische Energie und das zumindest eine Steuersignal von dem Energieversorgungsnetz zu empfangen.

Die elektrische Energie wird von dem Energieversorgungsnetz insbesondere mittels eines Stromsignals an die Vorrichtung übertragen. Das zumindest eine Steuersignal ist insbesondere auf das Stromsignal aufmoduliert und kann von der Vorrichtung demoduliert werden.

Insbesondere ist die Steuervorrichtung dazu eingerichtet, den Energiespeicher mit der von dem Energieversorgungsnetz bereitgestellten elektrischen Energie zu vorbestimmten Zeitpunkten zu laden.

Vorzugsweise ist die Steuervorrichtung dazu eingerichtet, den Energiespeicher mit der von dem Energieversorgungsnetz bereitgestellten elektrischen Energie in Niedriglastzeiten des Energieversorgungsnetzes zu laden.

Durch die Verlagerung des Ladens des Energiespeichers in Niedriglastzeiten des Energieversorgungsnetzes werden auch die Energiekosten für den Verbraucher gesenkt, da die elektrische Energie in Niedriglastzeiten im Allgemeinen kostengünstiger ist als zu Spitzenlastzeiten. Dies gilt beispielsweise für den so genannten Nachtstrom.

Gemäß einer weiteren bevorzugten Weiterbildung ist der Energiespeicher zum Anschluss an eine Gerätesteuerung zur Steuerung einer Versorgung zumindest eines Verbrauchers des elektrischen Gerätes mit der elektrischen Energie eingerichtet.

Das elektrische Gerät ist beispielsweise eine Dunstabzugshaube. Die Dunstabzugshaube hat als elektrischer Verbraucher beispielsweise einen Motor oder Lüftermotor und eine Beleuchtung. Der Lüftermotor ist dazu eingerichtet, ein Gebläse anzutreiben. Das Gebläse ist insbesondere ein strömungstechnisch optimiertes Gebläse mit einem möglichst hohen Wirkungsgrad, vorzugsweise mit einem rückwärts gekrümmten Lüfterrad. Der Motor ist insbesondere ein Gleichstrommotor, der im Vergleich zu Wechselstrommotoren einen reduzierten Energieverbrauch als Antriebsaggregat für das strömungstechnisch optimierte Gebläse hat.

Die Beleuchtung ist beispielsweise eine LED-Beleuchtung. Die LED-Beleuchtung ist gegenüber herkömmlichen Beleuchtungen mit Glühbirnen zur Senkung des Energieverbrauchs im Bereich der Beleuchtung geeignet. Des Weiteren hat die Dunstabzugshaube mechanische Schalter oder elektronische Steuerungen mit möglichst niedrigem Standby-Verbrauch. Dabei erfolgt die Energieversorgung der Dunstabzugshaube, insbesondere des Lüftermotors und der Beleuchtung, vorzugsweise mittels Gleichstrom aus dem Energiespeicher der Vorrichtung.

Insbesondere ist eine mit der Steuervorrichtung gekoppelte Bypass-Vorrichtung vorgesehen, welche zum Anschluss an die Gerätesteuerung des Gerätes und zum Überbrücken des Energiespeichers eingerichtet ist.

Damit kann die Vorrichtung die Energieversorgung des elektrischen Gerätes mittels einer direkten Versorgung aus dem Energieversorgungsnetz sicherstellen, selbst wenn der Energiespeicher ein ungenügend hohes Ladeniveau hat oder ausgefallen ist.

Damit bleibt die Netzabhängigkeit des elektrisches Gerätes erhalten. Folglich bleibt auch die Betriebssicherheit des elektrischen Gerätes erhalten, falls der Energiespeicher leer oder nur ungenügend voll ist.

Gemäß einer weiteren bevorzugten Weiterbildung ist die Steuervorrichtung dazu eingerichtet, den Energiespeicher mittels der Bypass-Vorrichtung in Abhängigkeit eines Ladezustandssignals zur Angabe des Ladezustands des Energiespeichers oder in Abhängigkeit eines von der Gerätesteuerung bereitgestellten Steuersignals zu überbrücken.

Insbesondere ist die Steuervorrichtung dazu eingerichtet, den Energiespeicher zu laden oder den Energiespeicher mittels der Bypass-Vorrichtung zu überbrücken, falls das Ladezustandssignal einen Ladezustand des Energiespeichers unterhalb einer vorbestimmten Schwelle angibt.

Gemäß einer weiteren bevorzugten Weiterbildung ist die Steuervorrichtung dazu eingerichtet, den Energiespeicher mittels der Bypass-Vorrichtung zu überbrücken, falls das von der Gerätesteuerung bereitgestellte Steuersignal eine Versorgung des elektrischen Gerätes mit der elektrischen Energie anfordert und das Ladezustandssignal einen Ladezustand des Energiespeichers unterhalb einer vorbestimmten Schwelle angibt.

Vorzugsweise ist eine Bestimmungsvorrichtung vorgesehen ist, welche dazu eingerichtet, den Ladezustand des Energiespeichers zu bestimmen und abhängig davon, das Ladezustandssignal bereitzustellen.

Durch den Einsatz der Bypass-Vorrichtung und der Bestimmungsvorrichtung ist die Vorrichtung in der Lage, den Ladezustand des Energiespeichers zu erkennen und notfalls die Energieversorgung des Gerätes sicherzustellen. Dies trifft insbesondere dann zu, wenn ein Energiebedarf durch das elektrische Gerät, insbesondere durch die Verbraucher des elektrischen Gerätes, bei einem niedrigen Ladeniveau des Energiespeichers besteht. Dabei existieren im Wesentlichen insbesondere zwei Möglichkeiten. Bei einer ersten Möglichkeit wird der Energiespeicher durch Einleiten eines sofortigen Ladevorgangs des Energiespeichers ohne Rücksicht auf Spitzenlastzeiten des Energieversorgungsnetzes oder anderer Smart-Grid-Vorgaben geladen. Die in dem Energiespeicher geladene elektrische Energie kann dann sofort dem elektrischen Gerät bereitgestellt werden. Bei einer zweiten Möglichkeit wird der Energiespeicher mittels der Bypass-Vorrichtung überbrückt. Folglich wird das elektrische Gerät direkt von dem Energieversorgungsnetz versorgt.

Gemäß einer weiteren bevorzugten Weiterbildung ist die Steuervorrichtung dazu eingerichtet, einen Ladezustand des Energiespeichers in Abhängigkeit von dem zumindest einen über das Energieversorgungsnetz übertragenen Steuersignal und von einem vorbestimmten Sollwert für den Ladezustand zu regeln.

Vorzugsweise ist der Energiespeicher als ein Akkumulator, insbesondere als ein Lithium-Ionen-Akkumulator, ausgebildet.

Gemäß einer bevorzugten Weiterbildung ist die Vorrichtung als ein für das elektrische Gerät eingerichteter Nachrüstsatz ausgebildet.

Der Nachrüstsatz mit dem Energiespeicher und der Steuervorrichtung zum Steuern des Ladens des Energiespeichers kann an ein elektrisches Gerät ohne Energiespeicher angeschlossen werden. Alternativ ist die Vorrichtung mit dem Energiespeicher und der Steuervorrichtung zum Laden des Energiespeichers in dem elektrischen Gerät integriert.

Gemäß einem weiteren Aspekt der Erfindung wird ein elektrisches Gerät vorgeschlagen, welches eine wie oben erläuterte Vorrichtung zur Versorgung des elektrischen Gerätes mit elektrischer Energie aufweist.

Vorzugsweise ist das elektrische Gerät ein lüftungstechnisches Gerät, zum Beispiel eine Dunstabzugshaube.

Gemäß einem weiteren Aspekt der Erfindung wird ein Verfahren zur Versorgung eines elektrischen Gerätes mit elektrischer Energie vorgeschlagen. Dabei wird die elektrische Energie dem elektrischen Gerät mittels eines Energiespeichers bereitgestellt. Das Laden des Energiespeichers mit der von einem Energieversorgungsnetz bereitgestellten elektrischen Energie wird in Abhängigkeit von zumindest einem über das Energieversorgungsnetz übertragenen Steuersignal gesteuert.

Weitere Vorteile und Einzelheiten der Erfindung werden anhand der in den schematischen Figuren dargestellten Ausführungsbeispiele näher erläutert. Dabei zeigt:
- Fig.1: eine schematische Darstellung eines ersten Ausführungsbeispiels einer Vorrichtung zur Versorgung eines elektrischen Gerätes mit elektrischer Energie;
- Fig. 2: eine schematische Darstellung eines zweiten Ausführungsbeispiels einer Vorrichtung zur Versorgung eines elektrischen Gerätes mit elektrischer Energie;
- Fig. 3: eine schematische Darstellung eines dritten Ausführungsbeispiels einer Vorrichtung zur Versorgung eines elektrischen Gerätes mit elektrischer Energie; und
- Fig. 4: ein schematisches Ablaufdiagramm eines Ausführungsbeispiels eines Verfahrens zur Versorgung eines elektrischen Gerätes mit elektrischer Energie.

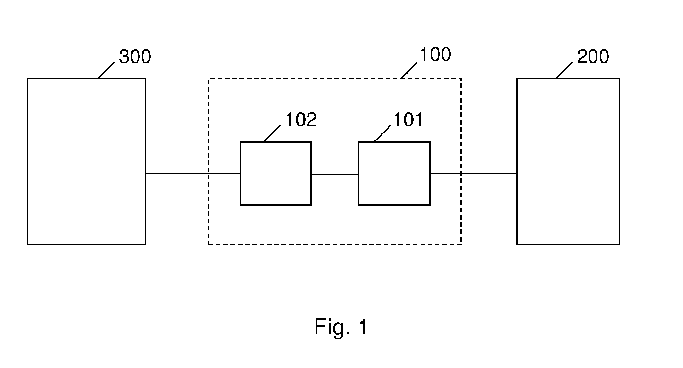

In der Fig. 1 ist eine Darstellung eines ersten Ausführungsbeispiels einer Vorrichtung 100 zur Versorgung eines elektrischen Gerätes 200 mit elektrischer Energie dargestellt.

Die Vorrichtung 100 ist zwischen dem elektrischen Gerät 200 und einem Energieversorgungsnetz 300 gekoppelt.

Die Vorrichtung 100 hat einen Energiespeicher 101 und eine Steuervorrichtung 102. Der Energiespeicher 101 ist dazu eingerichtet, elektrische Energie zu speichern und die gespeicherte elektrische Energie dem elektrischen Gerät 200 bereitzustellen. Die Steuervorrichtung 102 ist dazu eingerichtet, das Laden des Energiespeichers 100 mit der von dem Energieversorgungsnetz 300 bereitgestellten elektrischen Energie in Abhängigkeit von zumindest einem über das Energieversorgungsnetz 300 übertragenen Steuersignal zu steuern. Das Energieversorgungsnetz ist insbesondere als ein intelligentes Stromnetz ausgebildet, welches Steuersignale an gekoppelte Vorrichtungen, wie die Vorrichtung 100, übertragen kann. Insbesondere basiert das intelligente Stromnetz 300 auf der Smart-Grid-Technologie.

Die Steuervorrichtung 102 ist vorzugsweise dazu eingerichtet, den Energiespeicher 101 mit der von dem Energieversorgungsnetz 300 bereitgestellten elektrischen Energie zu vorbestimmten Zeitpunkten zu laden. Dabei ist die Steuervorrichtung 102 insbesondere derart ausgelegt, dass ein Nutzer die vorbestimmten Zeitpunkte vorgeben kann. Zur Vorgabe der vorbestimmten Zeitpunkte kann auch ein Computerprogramm eingesetzt werden, welches Steuersignale von dem intelligenten Stromnetz 300 empfangen kann.

Beispiele für solche vorbestimmten Zeitpunkte sind Niedriglastzeiten des Energieversorgungsnetzes 300. Eine beispielhafte Niedriglastzeit ist die Nacht.

Der Energiespeicher 101 ist beispielsweise als ein Akkumulator ausgebildet. Ein bevorzugtes Beispiel für einen solchen Akkumulator ist ein Lithium-Ionen-Akkumulator.

Gemäß einer weiteren Ausgestaltung ist die Vorrichtung 100 als ein für das elektrische Gerät 200 eingerichteter Nachrüstsatz ausgebildet.

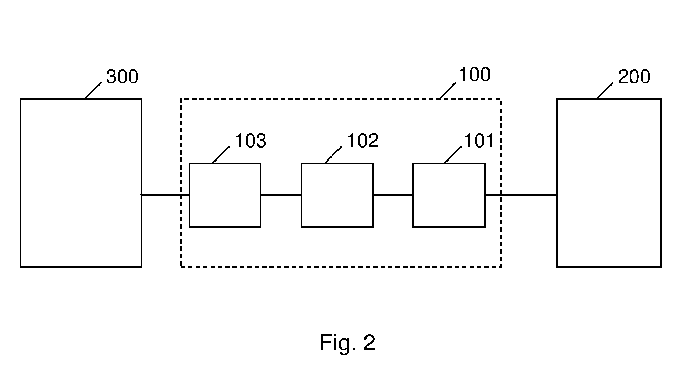

Die Fig. 2 zeigt eine schematische Darstellung eines zweiten Ausführungsbeispiels einer Vorrichtung 100 zur Versorgung eines elektrischen Gerätes 200 mit elektrischer Energie. Das zweite Ausführungsbeispiel der Vorrichtung 100 der Fig. 2 umfasst sämtliche Merkmale des ersten Ausführungsbeispiels der Vorrichtung 100 gemäß Fig. 1. Zur Vermeidung von Wiederholungen werden Übereinstimmungsmerkmale nicht erneut erläutert.

Gegenüber der Vorrichtung 100 der Fig. 1 ist die Vorrichtung 100 der Fig. 2 um eine Anschlussvorrichtung 103 erweitert. Die Anschlussvorrichtung 103 ist dazu eingerichtet, die Vorrichtung 100 an das Energieversorgungsnetz 300 anzuschließen. Ferner ist die Anschlussvorrichtung 103 dazu ausgelegt, die elektrische Energie und das zumindest eine Steuersignal von dem Energieversorgungsnetz zu empfangen. Die Anschlussvorrichtung 103 stellt die empfangene elektrische Energie und das zumindest eine empfangene Steuersignal der nachgeordneten Steuervorrichtung 102 bereit.

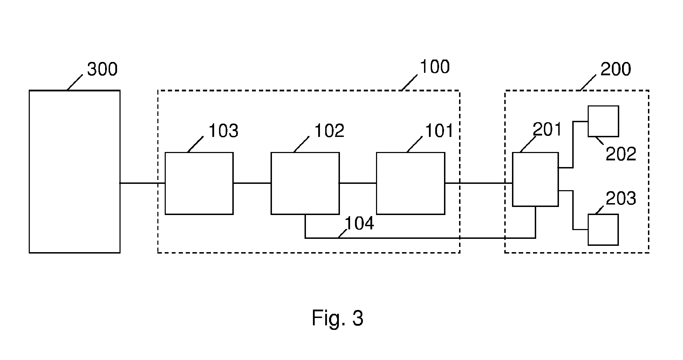

In der Fig. 3 ist eine schematische Darstellung eines dritten Ausführungsbeispiels einer Vorrichtung 100 zur Versorgung eines elektrischen Gerätes 200 mit elektrischer Energie abgebildet. Die Vorrichtung 100 der Fig. 3 basiert auf der Vorrichtung 100 und weist sämtliche Merkmale der Vorrichtung 100 der Fig. 2 auf. Folglich werden zur Vermeidung von Wiederholungen die Übereinstimmungsmerkmale mit der Fig. 2 nicht erläutert.

Gemäß dem dritten Ausführungsbeispiel der Vorrichtung 100 ist diese mit einer Gerätesteuerung 201 des elektrischen Gerätes 200 gekoppelt. Ferner hat das elektrische Gerät 200 eine Anzahl von elektrischen Verbrauchern 202, 203. Ohne Einschränkung der Allgemeinheit zeigt die Fig. 3 zwei elektrische Verbraucher 202 und 203. Das elektrische Gerät 200 ist beispielsweise eine Dunstabzugshaube. Beispiele für die elektrischen Verbraucher 202 und 203 sind ein Motor der Dunstabzugshaube und eine Beleuchtung, insbesondere eine LED-Beleuchtung.

Der Energiespeicher 101 der Fig. 3 ist derart ausgelegt, dass die Gerätesteuerung 201 des elektrischen Gerätes 200 die elektrischen Verbraucher 202, 203 mit elektrischer Energie versorgen kann.

Ferner weist die Vorrichtung 100 eine Bypass-Vorrichtung 104 auf. Die Bypass-Vorrichtung ist zwischen der Steuervorrichtung 102 und der Gerätesteuerung 201 gekoppelt. Dabei ist die Bypass-Vorrichtung 104 insbesondere zum Überbrücken des Energiespeichers 101 eingerichtet. Die Bypass-Vorrichtung 104 ist beispielsweise als eine Bypass-Schaltung ausgebildet.

Dabei ist die Steuervorrichtung 102 insbesondere dazu eingerichtet, den Energiespeicher 101 mittels der Bypass-Vorrichtung 104 in Abhängigkeit eines Ladezustandssignals zur Angabe des Ladezustands des Energiespeichers und/oder in Abhängigkeit eines von der Gerätesteuerung 201 bereitgestellten Steuersignals zu überbrücken.

Ferner kann die Steuereinrichtung 102 auch derart ausgelegt sein, dass sie den Energiespeicher 101 lädt oder den Energiespeicher 102 mittels der Bypass-Vorrichtung 104 überbrückt, falls das Ladezustandssignal einen Ladezustand des Energiespeichers 101 unterhalb einer vorbestimmten Schwelle angibt. Die vorbestimmte Schwelle kann insbesondere mittels einer mit der Steuervorrichtung 102 gekoppelten Eingabevorrichtung (nicht gezeigt) von einem Benutzer eingestellt werden.

Des Weiteren kann die Steuervorrichtung 102 dazu ausgelegt sein, den Energiespeicher 101 mittels der Bypass-Vorrichtung 104 zu überbrücken, falls das von der Gerätesteuerung 201 bereitgestellte Steuersignal eine Energieversorgung anfordert und das Ladezustandssignal einen Ladezustand des Energiespeichers 101 unterhalb der vorbestimmten Schwelle angibt. Zur Generierung des Ladezustandssignals ist vorzugsweise eine Bestimmungsvorrichtung vorgesehen. Die Bestimmungsvorrichtung ist insbesondere Teil der Steuervorrichtung 102. Die Bestimmungsvorrichtung ist dazu ausgelegt, einen Ladezustand des Energiespeichers 101 zu bestimmen und abhängig davon das Ladezustandssignal bereitzustellen.

Gemäß einer weiteren Ausgestaltung der Fig. 3 kann die Steuervorrichtung 102 dazu eingerichtet werden, den Ladezustand des Energiespeichers 101 in Abhängigkeit von dem zumindest einen über das elektrische Energieversorgungsnetz 300 übertragenen Steuersignal und von einem vorbestimmten Sollwert für den Ladezustand zu regeln. Zur Einstellung des vorbestimmten Sollwertes kann die oben erläuterte Eingabevorrichtung eingesetzt werden.

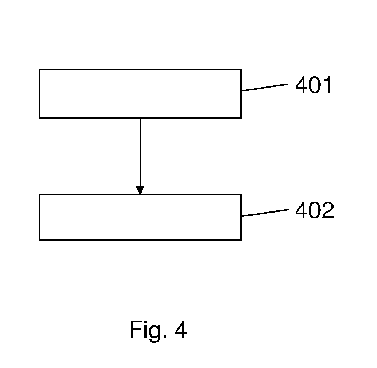

In Fig. 4 ist ein schematisches Ablaufdiagramm eines Ausführungsbeispiel eines Verfahrens zur Versorgung eines elektrischen Gerätes mit der elektrischen Energie dargestellt.

In Schritt 401 wird die elektrische Energie dem elektrischen Gerät mittels eines Energiespeichers bereitgestellt. Ein geeignetes Beispiel für einen solchen Energiespeicher ist ein Akkumulator. Ein geeigneter Akkumulator ist ein Lithium-Ionen-Akkumulator.

In Schritt 402 wird das Laden des Energiespeichers mit der von einem Energieversorgungsnetz bereitgestellten elektrischen Energie in Abhängigkeit von zumindest einem über das Energieversorgungsnetz übertragenen Steuersignal gesteuert.

### Bezugszeichenliste

- 100: Vorrichtung
- 101: Energiespeicher
- 102: Steuervorrichtung
- 103: Anschlussvorrichtung
- 104: Bypass-Vorrichtung
- 200: elektrisches Gerät
- 201: Gerätesteuerung
- 202: elektrischer Verbraucher
- 203: elektrischer Verbraucher
- 300: Energieversorgungsnetz
- 401, 402: Verfahrensschritt

## Patentansprüche

1. Vorrichtung (100) zur Versorgung eines elektrischen Gerätes (200) mit elektrischer Energie, mit:
einem Energiespeicher (101) zum Bereitstellen der elektrischen Energie, und
einer Steuervorrichtung (102) zum Steuern eines Ladens des Energiespeichers (101) mit der von einem Energieversorgungsnetz (300) bereitgestellten elektrischen Energie in Abhängigkeit von zumindest einem über das Energieversorgungsnetz (300) übertragenen Steuersignal.

2. Vorrichtung nach Anspruch 1, **dadurch gekennzeichnet, dass** eine Anschlussvorrichtung (103) zum Anschluss der Vorrichtung (100) an das Energieversorgungsnetz (300) vorgesehen ist, welche dazu eingerichtet ist, die elektrische Energie und das zumindest eine Steuersignal von dem Energieversorgungsnetz (300) zu empfangen.

3. Vorrichtung nach Anspruch 1 oder 2, **dadurch gekennzeichnet, dass** die Steuervorrichtung (102) dazu eingerichtet ist, den Energiespeicher (101) mit der von dem Energieversorgungsnetz (300) bereitgestellten elektrischen Energie zu vorbestimmten Zeitpunkten zu laden.

4. Vorrichtung nach einem der Ansprüche 1 bis 3, **dadurch gekennzeichnet, dass** die Steuervorrichtung (102) dazu eingerichtet ist, den Energiespeicher (101) mit der von dem Energieversorgungsnetz (300) bereitgestellten elektrischen Energie in Niedriglastzeiten des Energieversorgungsnetzes (300) zu laden.

5. Vorrichtung nach einem der Ansprüche 1 bis 4, **dadurch gekennzeichnet, dass** der Energiespeicher (101) zum Anschluss an eine Gerätesteuerung (201) zur Steuerung einer Versorgung zumindest eines Verbrauchers (202, 203) des elektrischen Gerätes (200) mit der elektrischen Energie eingerichtet ist.

6. Vorrichtung nach Anspruch 5, **dadurch gekennzeichnet, dass** eine mit der Steuervorrichtung (102) gekoppelte Bypass-Vorrichtung (104) vorgesehen ist, welche zum Anschluss an die Gerätesteuerung (201) des elektrischen Gerätes (200) und zum Überbrücken des Energiespeichers (101) eingerichtet ist.

7. Vorrichtung nach Anspruch 6, **dadurch gekennzeichnet, dass** die Steuervorrichtung (102) dazu eingerichtet ist, den Energiespeicher (101) mittels der Bypass-Vorrichtung (104) in Abhängigkeit eines Ladezustandssignals zur Angabe des Ladezustands des Energiespeichers (101) oder in Abhängigkeit eines von der Gerätesteuerung (201) bereitgestellten Steuersignals zu überbrücken.

8. Vorrichtung nach Anspruch 6 oder 7, **dadurch gekennzeichnet, dass** die Steuervorrichtung (102) dazu eingerichtet ist, den Energiespeicher (101) zu laden oder den Energiespeicher (101) mittels der Bypass-Vorrichtung (104) zu überbrücken, falls das Ladezustandssignal einen Ladezustand des Energiespeichers (101) unterhalb einer vorbestimmten Schwelle angibt.

9. Vorrichtung nach einem der Ansprüche 6 bis 8, **dadurch gekennzeichnet, dass** die Steuervorrichtung (102) dazu eingerichtet ist, den Energiespeicher (101) mittels der Bypass-Vorrichtung (104) zu überbrücken, falls das von der Gerätesteuerung (201) bereitgestellte Steuersignal eine Energieversorgung anfordert und das Ladezustandssignal einen Ladezustand des Energiespeichers (101) unterhalb einer vorbestimmten Schwelle angibt.

10. Vorrichtung nach einem der Ansprüche 7 bis 9, **dadurch gekennzeichnet, dass** eine Bestimmungsvorrichtung vorgesehen ist, welche dazu eingerichtet ist, den Ladezustand des Energiespeichers (101) zu bestimmen und abhängig davon das Ladezustandssignal bereitzustellen.

11. Vorrichtung nach einem der Ansprüche 1 bis 10, **dadurch gekennzeichnet, dass** die Steuervorrichtung (102) dazu eingerichtet ist, einen Ladezustand des Energiespeichers (101) in Abhängigkeit von dem zumindest einen über das Energieversorgungsnetz (300) übertragenen Steuersignals und von einem vorbestimmten Sollwert für den Ladezustand zu regeln.

12. Vorrichtung nach einem der Ansprüche 1 bis 11, **dadurch gekennzeichnet, dass** der Energiespeicher (101) als ein Akkumulator, insbesondere als ein Lithium-Ionen-Akkumulator ausgebildet ist.

13. Vorrichtung nach einem der Ansprüche 1 bis 12, **dadurch gekennzeichnet, dass** die Vorrichtung (100) als ein für das elektrische Gerät (200) eingerichtete Nachrüstsatz ausgebildet ist.

14. Elektrisches Gerät (200), insbesondere lüftungstechnisches Gerät, mit:
zumindest einer Vorrichtung (100) nach einem der Ansprüche 1 bis 13.

15. Verfahren zur Versorgung eines elektrischen Gerätes mit elektrischer Energie, mit:
Bereitstellen (401) der elektrischen Energie mittels eines Energiespeichers, und
Steuern (402) eines Ladens des Energiespeichers mit der von einem Energieversorgungsnetz bereitgestellten elektrischen Energie in Abhängigkeit von zumindest einem über das Energieversorgungsnetz übertragenen Steuersignal.
